# EUROPÄISCHE PATENTSCHRIFT

(11) **EP 1 092 682 B1**
(45) Veröffentlichungstag und Bekanntmachung des Hinweises auf die Patenterteilung: **19.10.2005**
(21) Anmeldenummer: 00121630.8
(22) Anmeldetag: 04.10.2000
(51) Int. Cl.: C02F 1/32, B01D 24/14

(54) **Vorrichtung zum Filtern und UV-Desinfektion von Wasser**
Device for filtering and ultraviolet disinfection of water
Dispositif de filtrage et de désinfection par ultraviolets de l'eau

(30) Priorität: 16.10.1999 DE 19950064
(43) Veröffentlichungstag der Anmeldung: 18.04.2001
(73) Patentinhaber: BEHNCKE Schwimmbad- und Wärmetechnik GmbH, D-85640 Putzbrunn bei München (DE)
(72) Erfinder: Behncke, Michael, Dipl. Ing., 85640 Putzbrunn bei München (DE)
(74) Vertreter: Baumann, Eduard K.

(56) Entgegenhaltungen:
- EP-A- 0 316 687
- DE-A- 3 247 747
- US-A- 3 971 338
- US-A- 5 217 607
- US-A- 5 540 848
- US-A- 5 573 666

## Beschreibung

Die Erfindung bezieht sich auf eine Filteranlage für Wasser gemäß dem Oberbegriff des Anspruches 1.

Derartige Filteranlagen bestehen im wesentlichen aus einem Filterbehälter mit einer Filtersubstanz, in der Regel feiner Sand zwischen eins und drei Millimeter Durchmesser, durch welche das Wasser hindurchgeleitet und anschließend dem Verwendungszweck zugeführt wird.

Der Verwendungszweck kann zum Beispiel eine kommunale Wasserversorgung für Gemeindebürger, ein öffentliches oder ein privates Schwimmbad mit Schwimmbecken sein.

In allen Fällen ist eine Desinfektion gegen Krankheitskeime erforderlich. Diesem Zwecke dient häufig die Beigabe von mehr oder weniger Chlor oder ähnlichen chemischen Substanzen. In einem verhältnismäßig aufwendigen Verfahren wird auch eine Desinfektion durch Ozon bewirkt. Ausser Desinfektionsverfahren, die während des Wasserumlaufes in einer zentralen Filteranlage erfolgen, ist in der Regel eine sogenannte Depot-Desinfizierung erforderlich, die beispielsweise im Wasser selbst erhalten bleibt, wie innerhalb eines Schwimmbades. Zu diesem Zweck wird häufig Chlor in unterschiedlicher Form beigegeben.

Es ist erwünscht, den Chlorgehalt möglichst gering zu halten, einerseits aus preislichen Gründen, andererseits auch aus gesundheitlichen Gründen, da beispielsweise Chlor beziehungsweise Chlorverbindungen bei verhältnismäßig vielen Menschen zu Allergien führen. Ausserdem erzeugt Chlor einen unangenehmen Geruch. Aus diesem Grunde setzt man zunehmend physikalische Desinfektionseinrichtungen ein, insbesondere getrennte Geräte, in welchen eine UV-Lampe angeordnet ist. Diese, in der Regel aus Edelstahl bestehenden Desinfektionsgeräte werden in Reihe zur eigentlichen Filteranlage von Wasser durchflossen.

Derartige getrennte Filter-Einrichtungen sind teuer und benötigen auch ein gewisses Zusatzvolumen, das häufig knapp ist.

Aus der US-PS 5,540,848 ist eine Filteranlage der eingangs angegebenen Art bekannt, bei der eine UV-Lampe zentral angeordnet ist und sich im wesentlichen über die gesamte Höhe des Behälters erstreckt, somit auch den Schmutzwasserbereich umfasst, wo sie beim Einsatz dieser Anlage für Schmutzwasser in kürzester Zeit verschmutzen würde. Das Auswechseln dieser Lampe ist umständlich und erfordert beinahe das gesamte Zerlegen der Filteranlage. Vorgesehen ist ein Karbonfilter. Material und die Gesamtkonstruktion dieser Anlage sind für geringere Umwälzmassen und für Frischwasser konzipiert.

In der Produkt-Übersicht der Anmelderin "Private und gewerbliche Filteranlagen, Schwimmbad und Sauna 1991", Heft 10/11, Seiten 78 bis 87, werden übliche getrennte Filteranlagen ohne Desinfizierung gezeigt, bei der der Wasserauslass über einen Bogen geführt ist.

In B. Höke, "Klärung und Filtration mechanisch verschmutzter Wässer,"; wlb-Wasser Luft und Betrieb, 22 (1978), Nr. 8, Seiten 409 bis 411, werden poröse Platten, Siebe etc. gemäß dem Stand der Technik beschrieben. Im technischen Handbuch - Wasseraufbereitungsanlagen -, VEB Verlagtechnik Berlin, 1966, Kapitel 2.1.4.3 und Seiten 436 bis 437, wird ein Düsenboden beschrieben, auf dem das Filter-material aufliegen kann. Die AT-PS 198295 beschreibt eine bisher übliche getrennte UV-Desinfektionsanlage.

Der Erfindung liegt die Aufgabe zugrunde, eine Filteranlage für Wasser gemäß dem Oberbegriff des Anspruches 1 oder 3 so auszubilden, dass eine UV-Desinfektionseinrichtung in den Filterbehälter integriert wird, die auch bei umfangreicherem Schmutzwasser-Durchfluss hochwirksam ist, kaum verschmutzt, und bei der die eingesetzten UV-Lampen in einfacher, wartungsfreundlicher Weise auswechselbar sind.

Die Aufgabe wird erfindungsgemäß durch die Merkmale des Kennzeichens des Anspruches 1 gelöst. Weitere Ausgestaltungen der Erfindung sind in den Unteransprüchen unter Schutz gestellt.

Beim Erfindungsgegenstand wird die Desinfektionseinrichtung in den Reinwasserbereich des Filterbehälters integriert und ragt wenigstens bis zum halben Durchmesser des Filterbehälters hinein. Der Wasserauslass ist als T-Stück ausgebildet, in dessen gerades horizontales Auslass-T-Stück eine UV-Lampe eingesetzt sein kann.

Bei größeren Schwimmbecken ist allenfalls zur zusätzlichen Erzielung einer Depotwirkung des Desinfektionsmittels innerhalb des Schwimmbeckens ein erheblich kleineres Desinfektionsgerät erforderlich; oder diese Depotwirkung wird durch zusätzliche dosierte Chlorbeigabe erzielt.

Die Länge dieser UV-Lampe ist allerdings etwa durch den halben Durchmesser des Filterbehälters begrenzt; daher setzt man vorzugsweise zwischen dem vertikalen, vom unteren Düsenstern kommenden ersten unteren Teilrohr der Auslassleitung und dem horizontalem Auslassrohr statt eines normalen Winkels einen siphonartigen Umleitungsbogen ein, so dass das horizontale Auslassrohr zur Aufnahme einer fast doppelt so langen UV-Lampe praktisch den ganzen Durchmesser des Filterbehälters einnimmt.

Bei einem anderen Ausführungsbeispiel bildet man den unteren Bodenbereich des Filterbehälters nicht in Form eines Filterkreuzes aus, bei dem radial nach aussen sich erstreckende Rohre mit feinen Düsenöffnungen direkt im unteren Sand gelagert sind, die das Wasser zentrisch sammeln und nach aussen führen, sondern bei dem der unterste Bodenbereich durch einen sogenannten Düsenboden abgedeckt wird, auf dem der Sand aufliegt. Auf diesem Düsenboden sind etwa halbkugelförmige Düsenkörper angeordnet, welche eine Vielzahl feiner Düsenöffnungen aufweisen. Diese sind um die Oberfläche des Düsenbodens verteilt, so dass lediglich das Wasser nach unten in einen Sand-freien Bereich abströmt und zentral nach aussen abgeführt werden kann.

Unterhalb dieses Düsenbodens lassen sich horizontal eine Vielzahl sternförmig angeordneter UV-Lampen anbringen, um eine intensive Desinfektion zu ermöglichen.

Ein bestimmter Wellenlängenbereich der UV-Lampen führt entweder zu einer unmittelbaren Abtötung der Krankheitskeime, oder es ist zusätzlich eine Sauerstoffleitung an die Aussenwände der UV-Lampen vorgesehen, beispielsweise eine Luftzuleitung über eine Luftpumpe, wodurch zusammen mit bestimmten UV-Strahlen Ozon erzeugt wird, welches die Krankheitskeime im vorbeifließendem Wasser abtötet. Im ersteren Falle hat sich eine Wellenlänge von etwa 265 nm, im anderen Falle zur Ozonerzeugung eine Wellenlänge von etwa 185 nm bewährt.

Die Zuleitungen zum Filterbehälter bestehen üblicherweise aus grauem Kunststoff, aus grauem Polyvinylchlorid oder PVC. Dieser kann aber langfristig den UV-Strahlen nicht standhalten und wird brüchig. Aus diesem Zwecke werden beim Erfindungsgegenstand vorzugssweise weitgehend UV-beständige Rohre aus schwarzem Polyvinylchlorid eingesetzt, und/oder die Innenwände der die UV-Lampen enthaltenden Rohre werden mit dünnem Edelstahlblech, beispielsweise 0,2 bis 0,3 Millimeter dick, ausgekleidet. Die Leitungen selbst werden gegebenenfalls vergrößert, um den Durchschnittsquerschnitt und damit den Durchflusswiderstand gegenüber einer getrennter Desinfektionseinrichtung in etwa konstant zu halten.

Die Anbringung von unsymmetrischen Verwirbelungsblechen oder dergleichen an den Wänden gegenüber der UV-Lampe führt zu einem intensiveren Kontakt der UV-Strahlen mit dem durchströmten Wasser und damit zu einer erhöhten Desinfektionsrate. Die Wirksamkeit der UV-Strahlen liegt etwa im Bereich von 20 bis 30 Zentimeter.

Ausführungsbeispiele der Erfindung sind in der Zeichnung dargestellt. Es zeigt:
Figur 1 in perspektivischer Darstellung einen Filterbehälter mit zwei Integrationsmöglichkeiten für eine UV-Lampe,
Figur 2 eine UV-Lampe in schematischer Darstellung,
Figur 3 eine in ein T-Stück des Auslasses des Filterbehälters eingeführte UV-Lampe,
Figur 4 ein anderes Ausführungsbeispiel mit dem unteren Bereich des Filterbehälters, wo unterhalb eines Düsenbodens sternförmig mehrere UV-Lampen angeordnet sind,
Figur 5 im wesentlichen die Darstellung von Figur 3 im Längsschnitt, wobei schematisch eine Luftleitung vorgesehen ist.

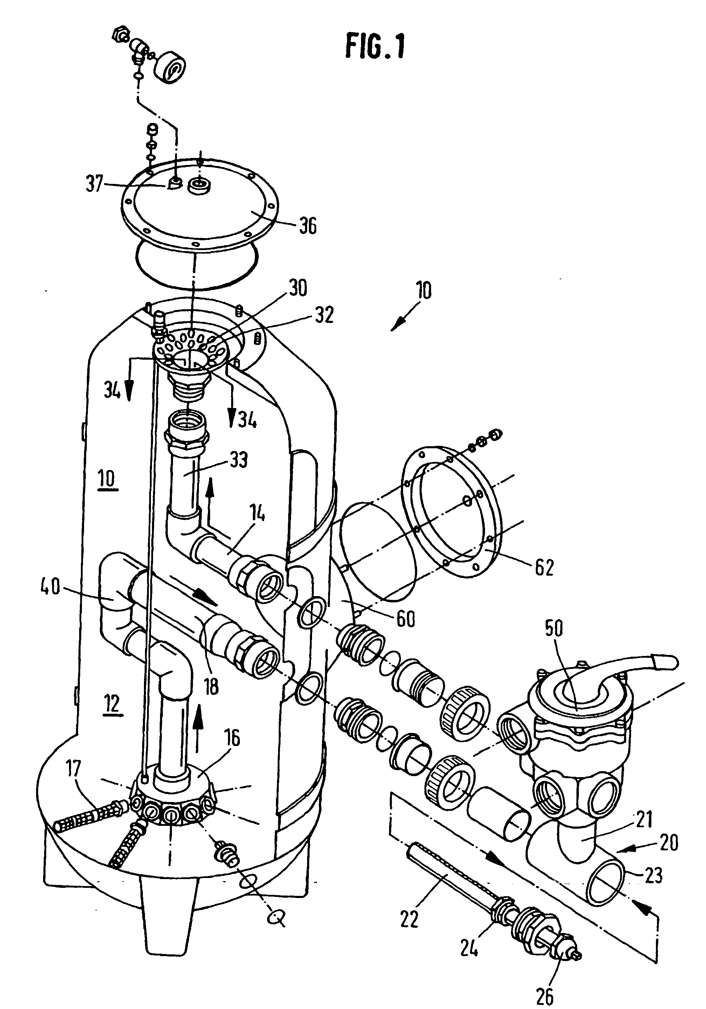

In Figur 1 ist der Filterbehälter allgemein mit 10 bezeichnet; er trägt einen Deckel 36 und eine seitlich versetzte Öffnung 37 für ein übliches Entlüftungsventil.

Ein unterer Düsenstern 16 weist sternförmig nach aussen verlaufende mit feinen Wasser-Durchtrittsöffnungen versehene Röhren 17 auf. Ohne Interesse für die Erfindung ist eine untere seitliche Entnahme-öffnung 60 mit Deckel 62 für den Sand, desgleichen ein Rückspülventil 50, mit dem der Auslass 20 über ein Winkelstück 21 zur Rückführung des gereinigten Wassers ins Schwimmbecken verbunden ist. Von dort gelangt das gespülte Wasser in der Regel in den Nutzungskreislauf, beispielsweise in das Schwimmbad. Bei der in regelmäßigen Abständen, aber nur sehr kurz, stattfindenden Filterreinigung wird der Wasserlauf umgekehrt, in diesem Falle wird über das Rückspülventil 50 das von der Wasser-Zuleitung 14, 33, 32 angesaugte Wasser in den Kanal geleitet.

Der Wasser-Einlass 14 des verschmutzten Wassers wird zentrisch durch ein zentrales Rohr 33 nach oben in einen Überlauf 30 mit zentral verteilten oberen Düsen 32 geleitet, durch welche es über den Umfangsrand austritt und nach unten auf die Oberfläche der Reinigungssubstanz 12, in der Regel Quarzsand von ein bis drei Millimetern Korngröße, fällt. Im unteren Bereich des Filterbehälters 10 ist ein Düsenstern 16 angeordnet, der mit sternförmigen Düsenröhren 17 verbunden ist, welche feine Öffnungen aufweisen. Eine Filterpumpe saugt über horizontale Auslass-Leitungen 18, 20 in Pfeilrichtung das Wasser an und zurück zum Schwimmbad oder zum sonstigen Verbraucher.

Nach einer Ausführung der Erfindung ist der Auslass 20 T-Stück förmig ausgebildet, wobei eine gerade Verlängerung 23 vorgesehen ist, in welche eine UV-Lampe 22 zu Desinfektionszwecken eingeführt werden kann.

Vorteilhaft ist das vertikale Auslassrohr als siphonartiger Umleitungsbogen 40 ausgebildet, der zu einer Verlängerung des horizontalen T-Stückes 20 des Auslasses 18 fast bis zum gesamten Durchmesser des Filterbehälters 10 führt. Dadurch wird ohne Abänderung der Aussenabmessungen der Einsatz einer erheblich längeren und damit wirksameren UV-Lampe ermöglicht.

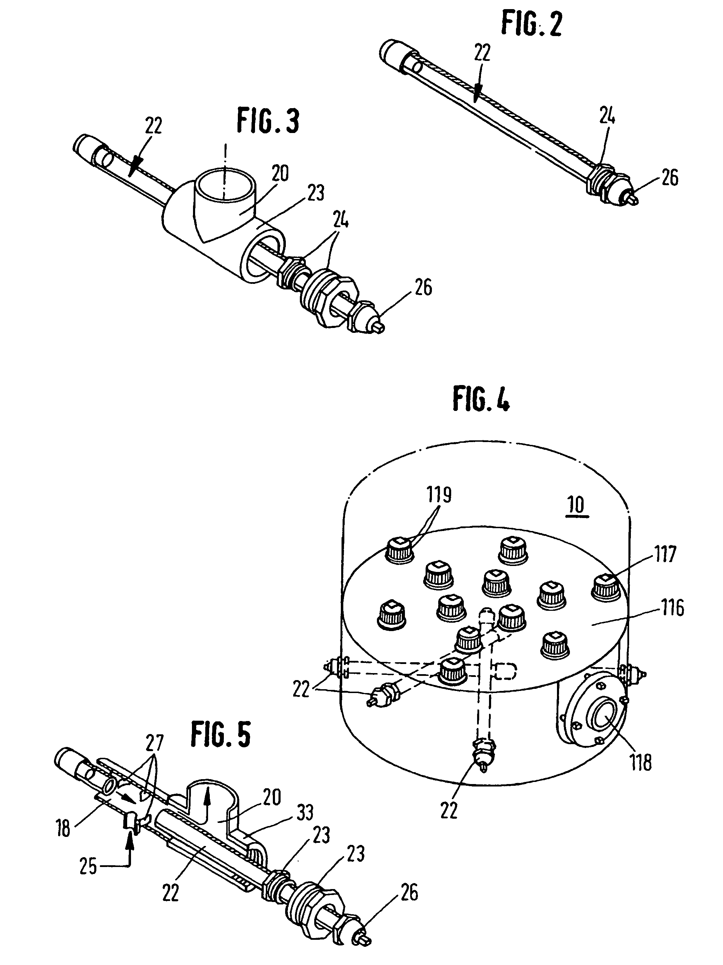

Figur 2 zeigt eine derartige UV-Lampe mit Lampensockel 26, welcher auch die Elektroanschlüsse enthält, und mit einem Verbindungsteil, in der Regel einem abdichtenden Verschraubungsteil 24.

Figur 3 zeigt eine in das T-Stück 20 eingesetzte UV-Lampe 22 mit Verschraubungsteil 24 und Sockel 26, wobei das gerade Verlängerungsstück mit 23 bezeichnet ist.

Figur 4 zeigt eine andere Ausführung der Erfindung mit einem Düsenboden 116, der die Filtersubstanz auffängt beziehungsweise trägt. Das Wasser wird hierbei durch eine Vielzahl von um die Oberfläche des Düsenbodens 116 verteilten Düsenkörpern 117, in welchen eine Vielzahl feiner Düsenöffnungen 119 angeordnet sind, nach unten geleitet, wo sich der Auslass 118 für das gefilterte Wasser befindet. In diesen Raum unterhalb des Düsenbodens 116 sind sternförmig eine Vielzahl von UV-Lampen 22 angeordnet.

Figur 5 zeigt im wesentlichen die Darstellung von Figur 3 im Längsschnitt, wobei schematisch eine Einführöffnung für eine Luftleitung 25 angeordnet ist. Durch diese wird Luft und damit Sauerstoff an die Aussenwände der UV-Lampe 22 geleitet und unter dem Einfluss der UV-Strahlen mit einer Wellenlänge von etwa 185 nm desinfizierendes Ozon erzeugt. Weiterhin zeigt Figur 5 schematisch an den Innenwänden aus Edelmetall angeordnete Verwirbelungskörper 27, um dadurch eine intensivere Berührung der UV-Strahlen mit dem durchströmenden Wasser zu erzielen.

## Patentansprüche

1. Filteranlage für Wasser, mit einem Filterbehälter, in welchem Filtersubstanz wie Sand angeordnet ist, durch welche über einen Einlass und einen Auslass zu reinigendes Schmutzwasser hindurchgeleitet wird,
und mit einer UV-Desinfektionseinrichtung für Krankheitskeime, an welcher das Wasser vorbeigeleitet wird und durch eine UV-Lampe desinfiziert wird,
**dadurch gekennzeichnet**,
a) dass die UV-Desinfektionseinrichtung in den Reinwasserbereich des Filterbehälters (10) integriert ist und etwa bis zum halben Durchmesser des Filterbehälters (10) hineinragt,
b) dass der Wasser-Auslass des Filterbehälters (10) als T-Stück (20) ausgebildet ist,
c) dass die UV-Lampe (22) in das gerade horizontale Auslass Stück (23) des T-Stückes (20) zentrisch und abdichtend eingesetzt ist.

2. Filteranlage nach Anspruch 1, **gekennzeichnet durch** eine Ausbildung des vertikalen Auslassrohres als syphonartiger Umleitungsbogen (40) zur Verlängerung des horizontalen Auslassrohres (18) im wesentlichen bis zum gesamten Durchmesser des Filterbehälters (10), oder **durch** einen längeren Vorbau für die UV-Desinfektionseinrichtung nach aussen.

3. Filteranlage für Wasser, mit einem Filterbehälter, in welchem Filtersubstanz wie Sand angeordnet ist, durch welche über einen Einlass und einen Auslass zu reinigendes Schmutzwasser hindurchgeleitet wird,
und mit einer UV-Desinfektionseinrichtung für Krankheitskeime, an welcher das Wasser vorbeigeleitet wird und durch eine UV-Lampe desinfiziert wird,
wobei zum Zurückhalten von Filtersubstanz im Filterbehälter ein Düsenboden mit etwa halbkugelförmigen, nach oben zum Sand ausgerichteten, eine Vielzahl feiner Düsenöffnungen enthaltenden Düsenkörpern angeordnet ist, und
wobei unterhalb des Düsenbodens der Wasserauslass für Reinwasser angeordnet ist,
**dadurch gekennzeichnet, dass** unterhalb des Düsenbodens (116) im Reinwasserbereich des Filterbehälters (10) sternförmig verteilt horizontale UV-Lampen (22) angeordnet sind.

4. Filteranlage nach einem der Ansprüche 1 bis 3, **dadurch gekennzeichnet, daß** der Wellenlängenbereich der UV-Lampe (22) zur unmittelbaren Abtötung der im vorbeiströmenden Wasser befindlichen Keime führt, und vorzugsweise im Wellenlängenbereich von 265 nm liegt.

5. Filteranlage nach einem der Ansprüche 1 bis 4, **gekennzeichnet durch** eine zusätzliche Sauerstoffquelle insbesondere eine Luftleitung (25), die den Aussenwänden der UV-Lampe (22) Sauerstoff zuführt,
und **durch** einen Wellenlängenbereich der UV-Lampe (22), der den zugeführten Sauerstoff wenigstens teilweise in Ozon verwandelt, der seinerseits die Krankheitskeime im vorbeiströmenden Wasser abtötet, vorzugsweise im Wellenlängenbereich von 185 nm.

6. Filteranlage nach einem der Ansprüche 1 bis 5, **dadurch gekennzeichnet, dass** die die UV-Lampen (22) aufnehmenden Kunststoffleitungen (18, 20) aus weitgehend UV-beständigem schwarzen Polyvinylchlorid bestehen, mit UV-beständigem Material, vorzugsweise dünnem Edelstahlblech, ausgekleidet sind, welches vorzugsweise zusätzlich UV-Strahlen reflektieren kann.

7. Filteranlage nach einem der Ansprüche 1 bis 5, **dadurch gekennzeichnet, dass** die Innenwände der die UV-Lampen enthaltenden Kunststoffleitungen (18, 20) mit UV-beständigem Material, vorzugsweise mit dünnem Edelstahlblech, ausgekleidet sind.

8. Filteranlage nach einem der Ansprüche 1 bis 7, **gekennzeichnet durch** unsymmetrisch angeordnete Verwirbelungsbleche (27) an den Wänden der die UV-Lampen (22) enthaltenden Kunststoffleitungen (18, 20).

## Claims

1. A filter system for water, comprising a filter tank containing a filter material such as sand, with impure water to be purified being guided through said filter material via an inlet and an outlet,
and comprising a UV disinfection device for germs, with the water passing by this device and being disinfected by a UV lamp,
**characterized in that**
a) the UV disinfection device is integrated into the pure-water area of the filter tank (10) and projects into the same up to approximately half the diameter of the filter tank (10),
b) that the water outlet of the filter tank (10) is provided as a T-piece (20),
c) that the UV lamp (22) is centrically, tightly inserted into the straight, horizontal outlet portion (23) of the T-piece (20).

2. The filter system according to claim 1, **characterized by** provision of the vertical outlet pipe as a siphon-like diversion elbow (40) to lengthen the horizontal outlet pipe (18) substantially up to the entire diameter of the filter tank (10), or by an elongated extension leading to the outside, for the UV disinfection device.

3. A filter system for water, comprising a filter tank containing a filter material such as sand, with impure water to be purified being guided through said filter material via an inlet and an outlet,
and comprising a UV disinfection device for germs, with the water passing by this device and being disinfected by a UV lamp,
with a nozzle plate containing roughly semi-spherical nozzle bodies being disposed in the filter tank to hold back filter material, said nozzle bodies being upwardly oriented toward the sand and containing a plurality of fine nozzle orifices, and
with the water outlet for pure water being disposed beneath said nozzle plate,
**characterized in that** horizontal UV lamps (22) distributed in a star-like pattern are arranged undemeath the nozzle plate (116) in the pure-water area of the filter tank (10).

4. The filter system according to any one of claims 1 to 3, **characterized in that** the wavelength range of the UV lamp (22) directly leads to the killing of germs present in the water flowing by and preferably lies within the wavelength range of 265 nm.

5. The filter system according to any one of claims 1 to 4, **characterized by** an additional oxygen source, particularly an air conduit (25) feeding oxygen to the outer walls of the UV lamp (22),
and by a wavelength range of the UV lamp (22), preferably within the wavelength range of 185 nm, that converts the supplied oxygen at least partly to ozone which in turn kills germs in the water flowing past.

6. The filter system according to any one of claims 1 to 5, **characterized in that** the plastic pipes (18, 20) accommodating the UV lamps (22) are comprised of largely UV-resistant black polyvinyl chloride and are lined with a UV-resistant material, preferably thin stainless steel sheet, which can preferably additionally reflect UV rays.

7. The filter system according to any one of claims 1 to 5, **characterized in that** the inner walls of the plastic pipes (18, 20) containing the UV lamps are lined with UV-resistant material, preferably thin stainless steel sheet.

8. The filter system according to any one of claims 1 to 7, **characterized by** asymmetrically arranged eddy sheets (27) on the walls of the plastic pipes (18, 20) containing the UV lamps (22).

## Revendications

1. Système de filtration d'eau, avec une cuve dans laquelle est disposée une substance filtrante telle que du sable à travers laquelle on fait passer par une entrée et une sortie l'eau sale destinée à être clarifiée et avec un dispositif de désinfection par UV destiné à détruire les germes pathogènes devant lequel on fait passer l'eau pour la désinfecter par l'intermédiaire d'une lampe UV,
**caractérisé en ce**
a) que le dispositif de désinfection par UV est intégré dans la zone d'eau propre de la cuve (10) et fait saillie jusqu'au demi-diamètre environ de la cuve (10),
b) que la sortie pour l'eau pratiquée dans la cuve (10) est conformée en té (20),
c) que la lampe UV (22) est insérée de manière étanche au centre de la portion horizontale droite (23) de la pièce en té (20) de sortie.

2. Système de filtration selon la revendication 1, **caractérisé par** un tuyau de sortie vertical conformé en forme de tuyau de dérivation (40) recourbé à la manière d'un siphon destiné à prolonger le tuyau de sortie (18) horizontal sensiblement jusqu'au bout du diamètre de la cuve (10) ou par une avancée pour le dispositif de désinfection par UV faisant davantage saillie vers l'extérieur.

3. Système de filtration d'eau, avec une cuve dans laquelle est disposée une substance filtrante telle que du sable à travers laquelle on fait passer par une entrée et une sortie l'eau sale destinée à être clarifiée
et avec un dispositif de désinfection par UV destiné à détruire les germes pathogènes devant lequel on fait passer l'eau pour la désinfecter par l'intermédiaire d'une lampe UV,
un fond à buses qui est équipé de corps de buses de forme approximativement hémisphérique dirigés vers le sable situé plus haut et contenant une pluralité de fines ouvertures et qui est destiné à retenir la substance filtrante étant disposé dans la cuve, et
la sortie pour l'eau propre étant disposée en dessous du fond à buses,
**caractérisé en ce que** des lampes UV (22) horizontales sont disposées en étoile en dessous du fond à buses (116) dans la zone d'eau propre de la cuve (10).

4. Système de filtration selon l'une quelconque des revendications 1 à 3, **caractérisé en ce que** la gamme de longueur d'ondes de la lampe UV (22) tue directement les germes se trouvant dans l'eau que l'on fait passer devant elle et que la longueur d'ondes préférée est de l'ordre de 265 nm.

5. Système de filtration selon l'une quelconque des revendications 1 à 4, **caractérisé par** une source d'oxygène supplémentaire, notamment par une conduite d'air (25), qui alimente en oxygène les parois extérieures de la lampe UV (22),
et par une gamme de longueur d'ondes de la lampe UV (22) qui transforme du moins en partie l'oxygène acheminé en ozone, ce dernier tuant les germes pathogènes contenus dans l'eau que l'on fait passer devant la lampe, la longueur d'ondes étant de préférence de l'ordre de 185 nm.

6. Système de filtration selon l'une quelconque des revendications 1 à 5, **caractérisé en ce que** les conduites en matière plastique (18, 20) recevant les lampes UV (22) sont réalisées en chlorure de polyvinyle noir résistant largement aux UV, sont revêtues à l'intérieur d'un matériau résistant aux UV, de préférence d'une fine tôle en acier spécial, qui de préférence est en outre en mesure de réfléchir les rayons UV.

7. Système de filtration selon l'une quelconque des revendications 1 à 5, **caractérisé en ce que** les parois internes des conduites en matière plastique contenant les lampes UV (18, 20) sont revêtues d'un matériau résistant aux UV, de préférence d'une fine tôle en acier spécial.

8. Système de filtration selon l'une quelconque des revendications 1 à 7, **caractérisé par** des chicanes (27) disposées de façon asymétrique sur les parois des conduites en matière plastique (18, 20) contenant les lampes UV (22).
